# EUROPEAN PATENT APPLICATION

(11) **EP 2 501 160 A1**
(43) Date of publication of application: **19.09.2012**
(21) Application number: 11187322.0
(22) Date of filing: 31.10.2011
(51) Int. Cl.: H04W 4/00

(54) **Display controlling apparatus and display controlling method**

(30) Priority: 18.03.2011 JP 2011060703
(71) Applicant: Kabushiki Kaisha Toshiba, Tokyo 105-8001 (JP)
(72) Inventor: Kanda, Tomohiro, Tokyo, 105-8001 (JP)
(74) Representative: Henkel, Breuer & Partner

(57) **Abstract**

A display controlling apparatus includes a wireless communication module, a receiving module, a reception controlling module, and a display controlling module. The wireless communication module is to be wirelessly connected to an access point or an external apparatus. The receiving module receives, when the wireless communication module is wirelessly connected to the access point through a first channel, an operation of transition to a waiting state for connection to the external apparatus. The reception controlling module disconnects, when the transition to the waiting state is performed in response to the reception of the operation, the wireless connection to the access point, and receives a connection request from the external apparatus through all channels. The display controlling module displays, when the connection request from the external apparatus is received and the external apparatus is connected through a second channel, screen information of the external apparatus.

## Description

### FIELD

An exemplary embodiment of the present invention relates to a display controlling apparatus and a display controlling method.

### BACKGROUND

There is a tendency that the performance of an internal processing module of a television apparatus is further enhanced. Therefore, a so-called remote display technique has been proposed in which a displaying screen of a PC is displayed on a television apparatus through wireless communication.

Recently, a television apparatus having a network function which enables the television apparatus to be connected a wireless access point (AP) has been developed.

When a television apparatus is connected to such an AP, however, hardware restrictions such as that the apparatus cannot respond to a remote display apparatus search or a connection request from a channel other the wireless channel which is used in the AP are often caused.

### BRIEF DESCRIPTION OF THE DRAWINGS

A general configuration that implements the various features of the invention will be described with reference to the drawings. The drawings and the associated descriptions are provided to illustrate embodiments of the invention and should not limit the scope of the invention.
Fig. 1 is a view showing the whole configuration of a first embodiment.
Fig. 2 is a diagram showing a hardware configuration of a television broadcast receiver in the first embodiment.
Fig. 3 is a diagram showing a screen transition in the television broadcast receiver in the first embodiment.
Fig. 4 is a view showing an example of a list screen for selecting a television broadcast receiver to be connected, in a PC.
Fig. 5 is a view showing an example of a connection waiting screen in the television broadcast receiver in the first embodiment.
Fig. 6 is a view showing an example of a PIN code displaying screen in the television broadcast receiver in the first embodiment.
Fig. 7 is a view showing an example of a warning screen in the television broadcast receiver in the first embodiment.
Fig. 8 is a flowchart showing the procedure of a connecting process for realizing a remote display in the television broadcast receiver in the first embodiment.
Fig. 9 is a flowchart showing the procedure of the connecting process for realizing the remote display in the television broadcast receiver in the first embodiment.

### DETAILED DESCRIPTION OF THE EMBODIMENTS

It is an object of the exemplary embodiment of the invention to provide a display controlling apparatus in which, even in the case where the apparatus is wirelessly connected to a first external apparatus, the user can cause the apparatus to be wirelessly connected to a second external apparatus, and a screen of the second external apparatus is displayed, and also a display controlling method.

According to an exemplary embodiment, there is provided a display controlling apparatus including: a wireless communication module, a receiving module, a reception controlling module, and display controlling module. The wireless communication module is configured to be wirelessly connected to at least one of an access point and an external apparatus. The receiving module is configured to, when the wireless communication module is wirelessly connected to the access point through a first channel, receive an operation of transition to a waiting state for connection to the external apparatus. The reception controlling module is configured to, when the transition to the waiting state is performed in response to the reception of the operation in the receiving module, disconnect the wireless connection to the access point, and receive a connection request from the external apparatus through all channels. The display controlling module is configured to, when the reception controlling module receives the connection request from the external apparatus and the wireless communication module is wirelessly connected to the external apparatus through a second channel, display screen information of the external apparatus that is received from the external apparatus.

### (First embodiment)

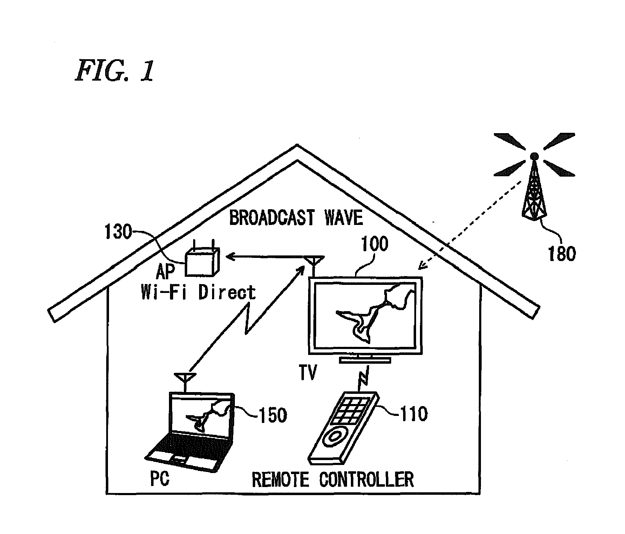

Fig. 1 is a view showing the whole configuration of a first embodiment. As shown in Fig. 1, the embodiment is an example in which a television broadcast receiver 100, a remote controller 110 for operating the television broadcast receiver 100, an AP 130, and a personal computer (PC) 150 exist in a home.

The television broadcast receiver 100 which receives a broadcast from a broadcast station 180, and which performs a displaying operation has a function which can display a displaying screen received from the PC 150 that is connected through wireless communication. By using the function, in the television broadcast receiver 100, a state where a TV program is reproduced can be switched to a display of a screen of the PC 150 in accordance with operations on the PC 150 and the television broadcast receiver 100. When the display switching is to be performed, it is required to input a Personal Identification Number (PIN) code which is displayed on the screen of the television broadcast receiver 100, into the PC 150.

In the embodiment, a PIN code is a combination of numbers which are randomly produced at each display, and set as a password for connecting to the television broadcast receiver 100. Namely, when a PIN code which is displayed on the television broadcast receiver 100 is input to the PC 150 and the PIN code is transmitted from the PC 150 to the television broadcast receiver 100, mutual communication for performing a remote display is established.

Furthermore, the television broadcast receiver 100 can use a network service such as internet connection, through the wireless communication with the AP 130.

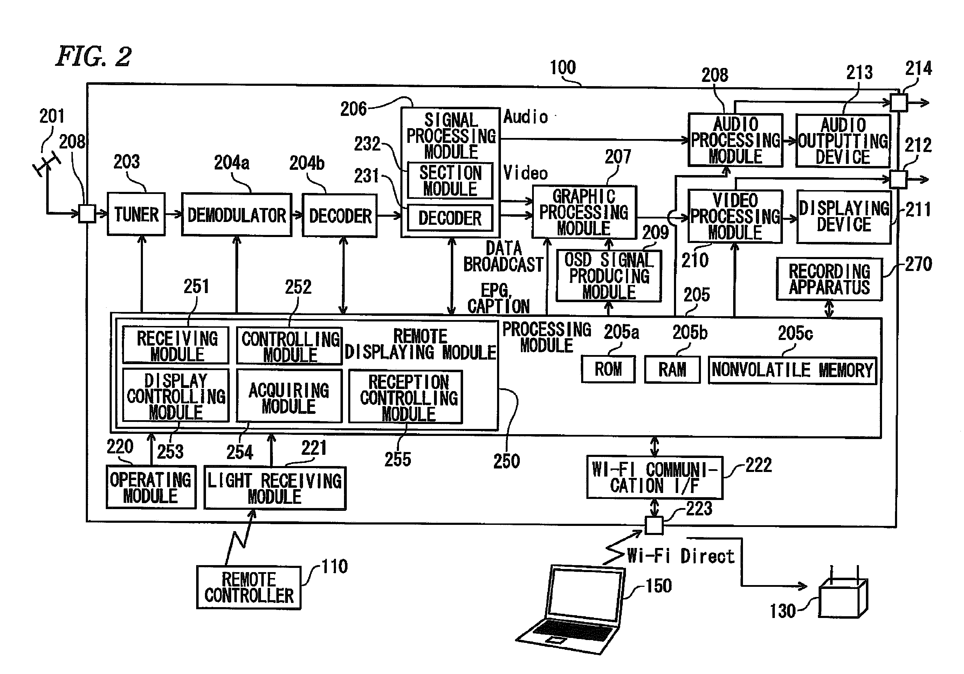

Fig. 2 is a diagram showing the hardware configuration of the television broadcast receiver 100. Fig. 2 is a block diagram showing a main signal processing system of the television broadcast receiver 100.

As shown in Fig. 2, an antenna 201 for receiving a broadcast wave is connected to an input side of the receiver. In the television broadcast receiver 100, moreover, the user can directly operate external displaying and audio outputting apparatuses through an operating module (not shown) disposed in the television broadcast receiver 100, and operate the apparatuses through the remote controller 110 by means of infrared communication.

In the television broadcast receiver 100, a broadcast program can be displayed by decoding a received digital television broadcast signal, and the user can watch the received broadcast program. Moreover, the broadcast program can be watched also by using the external displaying and audio outputting apparatuses, and recording of the received broadcast program can be performed.

The television broadcast receiver 100 shown in Fig. 2 may include a broadcast wave receiving circuit configured by a plurality of tuners and the like.

A terrestrial digital broadcast signal received by the antenna 201 for receiving a terrestrial broadcast is supplied to a tuner 203 for a terrestrial digital broadcast through an input terminal 202.

The tuner 203 tunes a broadcast signal of a desired channel in accordance with a control signal supplied from a processing module 205, and outputs the tuned broadcast signal to a demodulator 204a.

The demodulator 204a demodulates the broadcast signal which is tuned by the tuner 203, in accordance with a control signal supplied from the processing module 205 to obtain a transport stream (TS) containing a desired program, and outputs it to a decoder 204b.

The decoder 204b performs a TS decoding process on a TS-multiplexed signal in accordance with a control signal supplied from the processing module 205, and outputs a Packetized Elementary Stream (PES) which is obtained by depacketizing digital video and audio signals of the desired program, to an STD buffer in a signal processing module 206. The decoder 204b also outputs section information transmitted by the digital broadcast, to a section module 232 in the signal processing module 206.

The signal processing module 206 includes a decoder 231 and the section module 232, and processes an input signal.

During television watching, the decoder 231 selectively applies certain digital signal processing on the digital video and audio signals supplied from the decoder 204b, and then outputs the signals to a graphic processing module 207 and an audio processing module 208. During program recording, in contrast, signals which are obtained by selectively applying certain digital signal processing on the digital video and audio signals supplied from the decoder 204b are recorded on a recording apparatus (for example, an HDD) 270 through the processing module 205.

During reproduction of a recorded program, the decoder 231 applies certain digital signal processing on data of the recorded program which are read out from the recording apparatus (for example, an HDD) 270 through the processing module 205, and outputs a result of the processing to the graphic processing module 207 and the audio processing module 208.

Moreover, the decoder 231 applies certain digital signal processing on data which are received from the PC 150 through the processing module 205, and outputs a result of the processing to the graphic processing module 207 and the audio processing module 208.

Various data (such as key information for B-CAS descrambling) for acquiring a program, electronic program guide (EPG) information, program attribute information (such as the genre of the program), caption information (service information, SI, or PSI), and the like are supplied from the signal processing module 206 to the processing module 205. The processing module 205 performs an image producing process for displaying an EPG and a caption from the input information, and outputs the produced image information to the graphic processing module 207.

The processing module 205 has a function of controlling program recording and program reservation recording. During reception of program reservation, electronic program guide (EPG) information is displayed on a displaying device 211, and, in response to a user input through an operating module 220 or the remote controller 110, the contents of reservation is set in a certain storage module. The tuner 203, the demodulator 204a, the decoder 204b, and the signal processing module 206 are controlled to record the reserved program at a preset time.

The section module 232 outputs, in the section information supplied from the decoder 204b, various data for acquiring a program, the electronic program guide (EPG) information, the program attribute information (such as the genre of the program) , the caption information (service information, SI, or PSI), and the like to the processing module 205.

The graphic processing module 207 has a function of combining (1) the digital video signal supplied from the decoder 231 in the signal processing module 206, (2) an OSD signal produced by an On Screen Display (OSD) signal producing module 209, (3) image data in the data broadcast, and (4) the EPG and caption signal produced by the processing module 205 with one another, and outputting the resulting signal to a video processing module 210. When a caption by a caption broadcast is to be displayed, based on the caption information due to the control of the processing module 205, the graphic processing module 207 performs a process of superimposing the caption information on the video signal.

The digital video signal output from the graphic processing module 207 is supplied to the video processing module 210. The video processing module 210 converts the supplied digital video signal to an analog video signal which can be displayed on the displaying device 211, and then outputs the signal to the displaying device 211 to display a video. Moreover, the video processing module 210 can output a video signal of a format which can be displayed on an external displaying device (not shown), to the external displaying device through an output terminal 212 to display a video.

The audio processing module 208 converts the supplied digital audio signal to an analog audio signal which can be reproduced by an audio outputting device 213, and then outputs the signal to the audio outputting device 213 to reproduce the audio signal. Moreover, the audio processing module can output an audio signal of a format which can be reproduced by an external audio outputting device (not shown), to the external audio outputting device through an output terminal 214 to reproduce the audio signal.

In the television broadcast receiver 100, the whole operations including the above-described various receiving operations are generally controlled by the processing module 205. The processing module 205 incorporates a Central Processing Unit (CPU) and the like, receives operation information from the operating module 220, or that transmitted from the remote controller 110 through a light receiving module 221, .and controls the components to reflect the operation contents (for example, an operation of switching the channel).

In this case, the processing module 205 uses mainly a Read Only Memory (ROM) 205a storing control programs which are to be executed by the CPU, a Random Access Memory (RAM) 205b which provides a working area to the CPU, and a nonvolatile memory 205c such as a flash memory which stores various setting information, control information, program information, and the like.

The processing module 205 is connected to a wireless LAN terminal 223 through a Wi-Fi communication I/F 222. According to the configuration, the processing module 205 can perform information transmission through the Wi-Fi communication I/F 222 with a LAN compatible apparatus (for example, the AP 130 or the PC 150) which is connected to the wireless LAN terminal 223 through a wireless communication circuit.

The processing module 205 further includes a remote displaying module 250. As shown in Fig. 2, the remote displaying module 250 includes a receiving module 251, a controlling module 252, a display controlling module 253, an acquiring module 254, and a reception controlling module 255.

Here, the configuration of the remote displaying module 250 of the television broadcast receiver 100, i.e., the configuration for realizing a remote display will be described.

The receiving module 251 receives a wait request operation for causing transition to a waiting state of connection to the PC 150. Examples of the wait request operation are pressing of a predetermined button of the remote controller 110, and that of a button of the television broadcast receiver 100.

The controlling module 252 performs various controls for realizing a remote display. When the receiving module 251 receives the wait request operation, for example, the controlling module performs a control for causing the television broadcast receiver 100 to transition to a connection waiting state.

In order to realize a remote display, the display controlling module 253 displays various information on the displaying device 211 of the television broadcast receiver 100. When the receiving module 251 receives the wait request operation and the controlling module 252 performs transition to the connection waiting state, for example, the display controlling module 253 displays an ID for identifying the television broadcast receiver 100 on the displaying device 211. When the user views the display, therefore, the ID indicating the connection destination can be selected on a remote display application of the PC 150.

With reference to Figs. 2 to 9, next, the procedure will be described in which connection to the PC 150 is started from the screen display during a television broadcast, and a remote display of the screen of the PC 150 is conducted on the displaying device 211 of the television broadcast receiver 100 is performed.

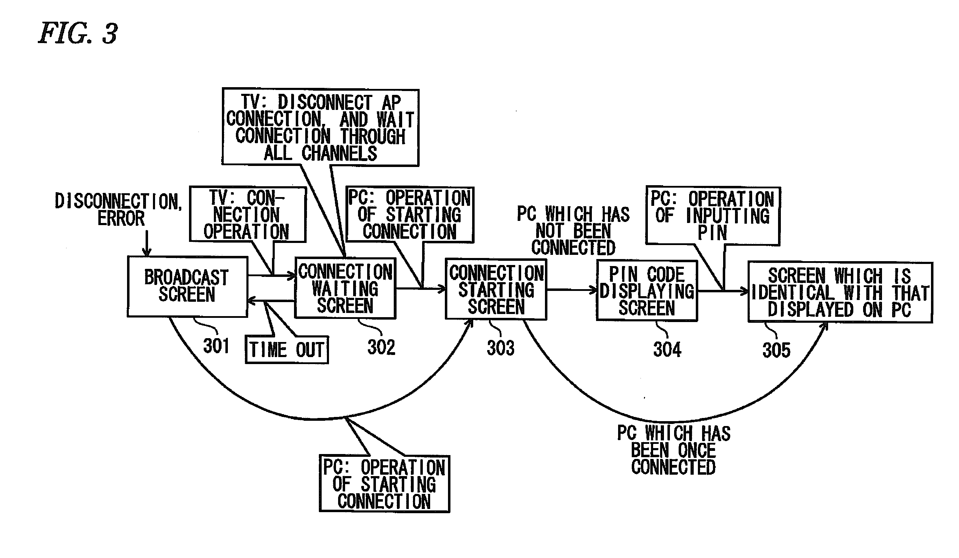

Fig. 3 is a diagram showing a screen transition in the television broadcast receiver 100 in the first embodiment. Here, an example in which the television broadcast receiver 100 has a function of wirelessly connecting to the AP 130 and is wirelessly connected to the AP 130 through a first channel is assumed.

As shown in Fig. 3, in the case where, when the television broadcast receiver 100 displays a broadcast screen 301 of a broadcast wave program, the receiving module 251 receives a remote connection operation to the television broadcast receiver 100 through the remote controller 110 or the like, transition to the connection waiting state is performed, and the display controlling module 253 displays a connection waiting screen 302. At this time, the processing module 205 disconnects the wireless connection to the AP 130 which is connected to the wireless LAN terminal 223 through the Wi-Fi communication I/F 222, and the connection waiting state is set in all the channels.

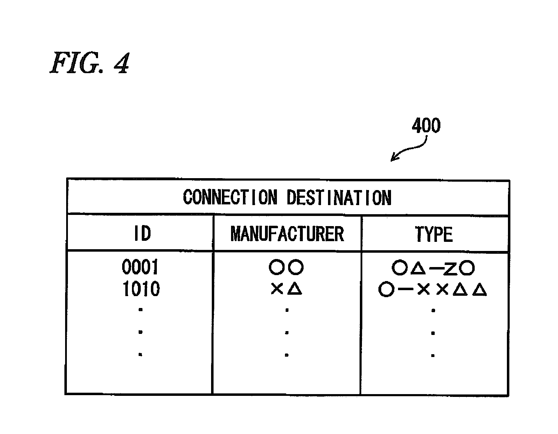

Fig. 4 is a view showing an example of a list screen 400 for selecting a television broadcast receiver to be connected, in the remote display application of the PC 150. As shown in Fig. 4, in the list screen 400 in the embodiment, the display controlling module 253 displays, in the form of a list, the ID for identifying the television broadcast receiver, the manufacturer name, and the type of the television broadcast receiver. The ID for identifying the television broadcast receiver is the ID which identifies the television broadcast receiver, and which is displayed in the case where the transition to the connection waiting state is performed when the television broadcast receiver displays the broadcast screen 301 displaying a broadcast wave program. Namely, after viewing the ID which is displayed when the television broadcast receiver transitions to the connection waiting state, the user selects an ID which is displayed in the form of a list on the PC 150, whereby a desired television broadcast receiver can be selected as a connection destination.

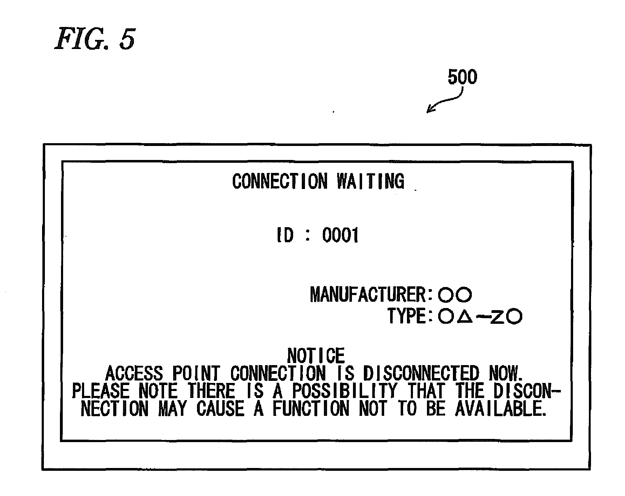

Fig. 5 is a view showing an example of a connection waiting screen 500 (a detail of the connection waiting screen 302 which is shown in Fig. 3). As shown in Fig. 5, in the connection waiting screen 500, the display controlling module 253 displays the manufacturer name and type of the television broadcast receiver 100 in addition to the ID for identifying the television broadcast receiver 100. In the connection waiting screen 500, the display controlling module 253 displays also that the wireless connection between the television broadcast receiver 100 and the AP 130 is disconnected, and there is a possibility that a function to be performed through a network cannot be used because of the disconnection. Examples of such a function to be performed through a network are the Internet browser function, a function of a digital media player, and that of a digital media renderer.

Returning to Fig. 2, when a certain time period has elapsed (time out) after the receiving module 251 receives the wait request operation to transition to the connection waiting state, the controlling module 252 performs a control of cancelling the connection waiting state. It is assumed that the certain time period is set to an adequate time period for each embodiment while considering the user's convenience. Therefore, the display controlling module 253 causes the connection waiting screen 302 to transition to the broadcast screen 301, and the processing module 205 causes the wireless LAN terminal 223 and the AP 130 to be wirelessly connected to each other through the Wi-Fi communication I/F 222 and the first channel.

In order to realize a remote display, the reception controlling module 255 receives various information from the PC 150. For example, the reception controlling module 255 receives a request for connection to the television broadcast receiver 100 which is identified by the displayed ID, from the PC 150.

When, in the connection waiting state, the reception controlling module 255 of the television broadcast receiver 100 receives a request (instructions which are transmitted in response to a key operation on a keyboard by the user, or the like) for connection to the own apparatus which is identified by the ID, from the PC 150, the display controlling module 253 displays a connection starting screen 303 of Fig. 3. Then, the television broadcast receiver 100 wirelessly communicates with the PC 150 through a second channel. The second channel may be identical with or different from the above-described first channel.

After displaying the connection starting screen 303, the display controlling module 253 displays a PIN code on a PIN code displaying screen 304. In order to hold the security in the wireless connection of the PC 150 to the television broadcast receiver 100, the PIN code is set as a PIN code of the Wi-Fi Protected Setup (WPS) which is a combination of numbers that are randomly produced in the television broadcast receiver.

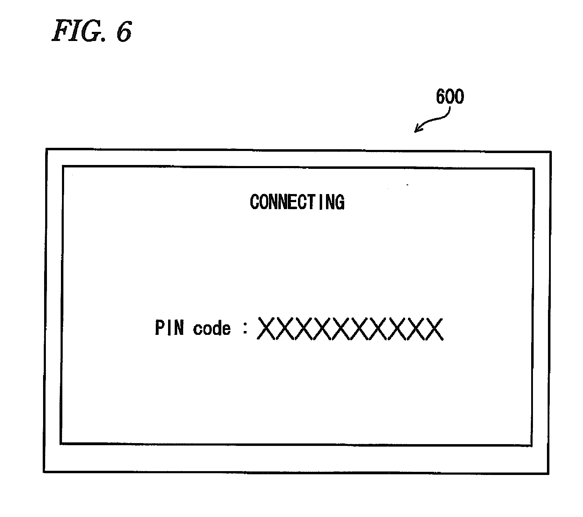

Fig. 6 is a view showing an example of a PIN code displaying screen 600 (a detail of the displaying screen 304 which is shown in Fig. 3). As shown in Fig. 6, in the displaying screen 600, a PIN code for wirelessly connecting the PC 150 to the television broadcast receiver 100 is displayed.

Thereafter, the user performs an operation of inputting the PIN code in the remote display application of the PC 150, and then the PC 150 transmits the PIN code to the television broadcast receiver 100. Therefore, the reception controlling module 255 receives the PIN code from the PC 150.

When the reception controlling module 255 receives the PIN code, wireless communication in which a remote display is performed between the PC 150 and the television broadcast receiver 100 is established. In accordance with data transmitted from the PC 150, the display controlling module 253 displays a screen 305 which is identical with that displayed on the PC 150, on the displaying device 211.

Returning to Fig. 2, when the reception controlling module 255 receives the PIN code and starts wireless communication with the PC 150, the acquiring module 254 acquires identification information for identifying the PC 150, from the PC 150. Then, the acquiring module 254 stores the acquired identification information in the nonvolatile memory 205c. The identification information for identifying the PC 150 is requested to be information which can identify the PC 150, and may contain a MAC address or the like.

According to the configuration, in the case where a communication request is thereafter received from the PC 150 which is identified by the identification information stored in the nonvolatile memory 205c, the controlling module 252 establishes wireless communication between the PC 150 and the television broadcast receiver 100 even when the television broadcast receiver 100 does not transition to the connecting state. In the case where the PC 150 previously performs the remote connection, namely, the display controlling module 253 causes transition from the connection starting screen 303 to the screen 305 which is identical with that displayed on the PC 150, without causing transition to the PIN code displaying screen 304. Thereafter, the controlling module 252 controls the display controlling module 253 to display screen information received from the PC 150 on the displaying device 211.

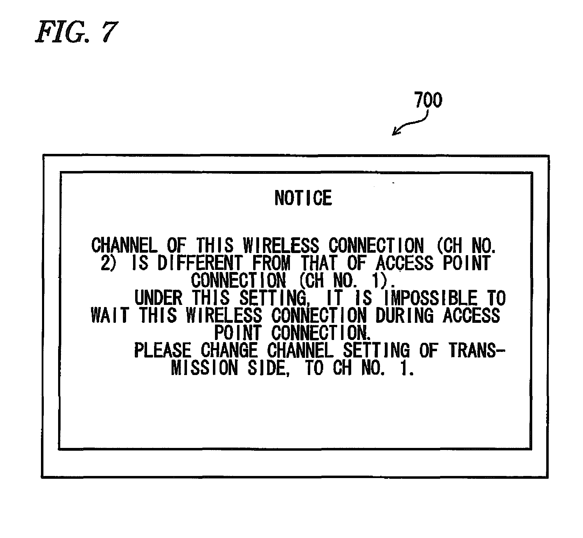

In the embodiment, before the display of the screen 305, the display controlling module 253 displays a screen 700 such as shown in Fig. 7. This is performed because, when a channel which is used in the connection between the television broadcast receiver 100 and the AP 130 is different from that which is used in the connection between the television broadcast receiver 100 and the PC 150, there is a possibility that the screen of the PC 150 cannot be displayed on the television broadcast receiver 100 because of a hardware restriction. In the embodiment, after the screen 700 is displayed for a certain time period, the display controlling module 253 controls the screen 700 not to be displayed. Alternatively, in response to a user's operation of pressing a button of the remote controller 110, for example, the display controlling module 253 may control the screen 700 not to be displayed.

When a request for disconnecting a remote display is issued to the television broadcast receiver 100 by an input operation performed on the PC 150, or when an error occurs during the display of a remote display, the display controlling module 253 causes transition from the screen 305 which is identical with that displayed on the PC 150, to the broadcast screen 301 displaying a broadcast wave program. In this case, when the wireless connection between the television broadcast receiver 100 and the AP 130 is disconnected, the processing module 205 of the television broadcast receiver 100 causes the wireless LAN terminal 223 and the AP 130 to be wirelessly connected to each other through the Wi-Fi communication I/F 222 and the first channel.

After the wireless connection between the television broadcast receiver 100 and the PC 150 is disconnected, the television broadcast receiver 100 displays the broadcast screen 301. At this time, it is assumed that the channel (first channel) of the wireless connection between the television broadcast receiver 100 and the AP 130 is determined to be identical with the channel (second channel) of the wireless connection between the television broadcast receiver 100 and the PC 150. When the reception controlling module 255 of the television broadcast receiver 100 receives the request for connection to the own apparatus which is identified by the ID, from the PC 150, then, the display controlling module 253 displays the connection starting screen 303 of Fig. 3 without displaying the connection waiting screen 302 of Fig. 3. Then, the television broadcast receiver 100 wirelessly communicates with the PC 150 through the second channel (i.e., the first channel).

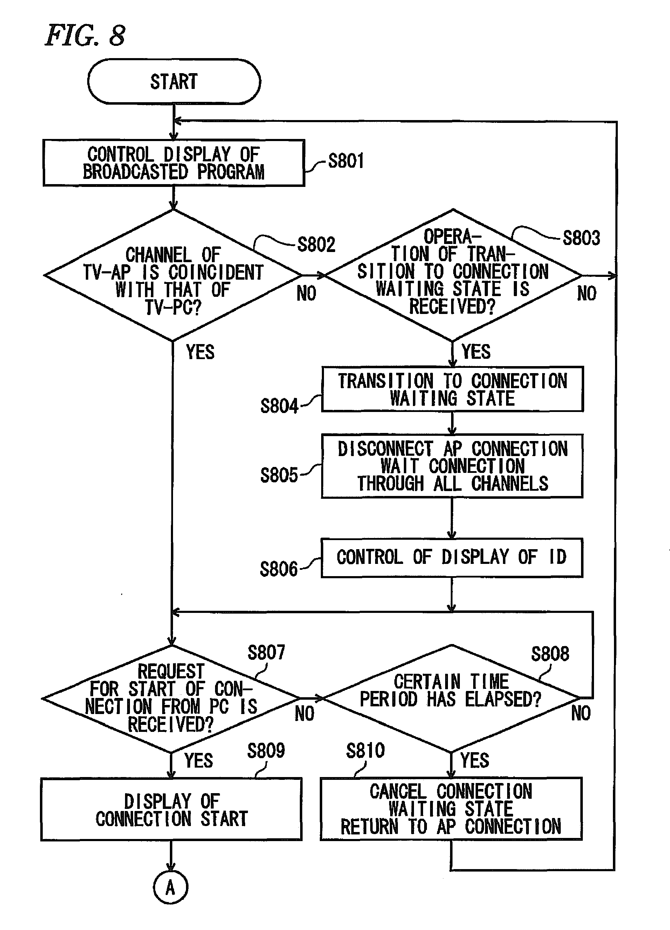

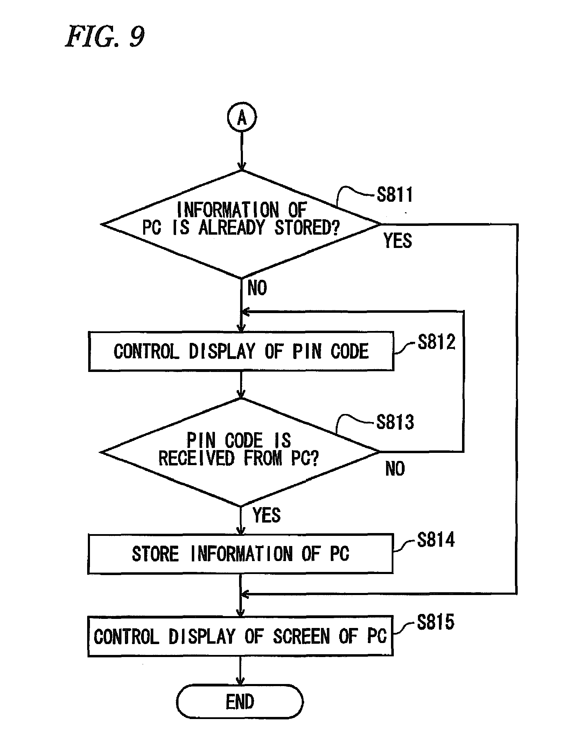

Next, a connecting process for realizing a remote display of a PC (for example, the PC 150) in the television broadcast receiver 100 of the embodiment will be described. Figs. 8 and 9 are flowcharts showing the procedure of the above-described process in the television broadcast receiver 100 of the embodiment.

First, the display controlling module 253 controls to display a broadcasted program as a broadcast screen (step S801).

Next, the processing module 205 determines whether the first channel of the wireless connection between the television broadcast receiver 100 and the AP 130 and the second channel of the wireless connection between the television broadcast receiver 100 and the PC 150 are identical with each other or not (step S802).

When the first channel and the second channel are identical with each other, the process proceeds to step S807.

In contrast, when the first channel and the second channel are not identical with each other, it is detected whether the receiving module 251 receives an operation of transition to the connection waiting state from the remote controller 110 or the like or not (step S803). If the module does not receive an operation of transition to the connection waiting state (step S803: No), the process returns to step S801, and the display controlling module 253 continues to control the display of the broadcast screen.

In contrast, when an operation of transition to the connection waiting state is received(step S803: Yes), the controlling module 252 causes transition to the connection waiting state (step S804), the processing module 205 disconnects the wireless connection to the AP 130, and the connection waiting state is set in all the channels (step S805). In the connection waiting screen, thereafter, the display controlling module 253 controls to display the ID for identifying the television broadcast receiver 100 (step S806).

Thereafter, it is determined whether the reception controlling module 255 receives a request for start of connection from the PC 150 or not (step S807). When the request for start of connection is not received (step S807: No), the controlling module 252 determines whether a certain time period has elapsed or not (step S808). When it is determined that the certain time period has not elapsed (step S808: No), the process returns to step S807, and the reception controlling module 255 determines whether the request for start of connection is received from the PC 150 or not (step S807). In contrast, when it is determined that the certain time period has elapsed (step S808: Yes), the controlling module 252 cancels the connection waiting state (step S810), and the display controlling module 253 again controls to display a broadcasted program (step S801).

If it is determined in step S807 that the reception controlling module 255 receives the request for start of connection from the PC 150 (step S807: Yes), the display controlling module 253 displays information indicating that connection is started (step S809).

Thereafter, the controlling module 252 determines whether identification information of the PC 150 which requests the start of connection is already stored in the nonvolatile memory 205c or not (Fig. 9, step S811). If it is determined that the information is already stored in the nonvolatile memory 205c (step S811: Yes), wireless communication with the PC 150 is established, and then the display controlling module 253 controls to display a screen which is identical with that displayed on the PC 150 (Fig. 9, step S815).

In contrast, if it is determined that the information is not already stored in the nonvolatile memory 205c (step S811: No), it is assumed that a new PC 150 issues a connection request, and the display controlling module 253 controls to display the PIN code on the screen (Fig. 9, step S812). Then, the reception controlling module 255 determines whether the PIN code is received from the PC 150 or not (Fig. 9, step S813). If not received (step S813: No), the display controlling module 253 continues to control the display of the PIN code (step S812).

In contrast, if the reception controlling module 255 determines that the PIN code is received (step S813: Yes), the controlling module 252 stores information for identifying the PC 150 which transmits the PIN code, in the nonvolatile memory 205c (Fig. 9, step S814).

After communication with the PC 150 is established, the display controlling module 253 controls to display a screen which is identical with that displayed on the PC 150 (Fig. 9, step S815).

In the embodiment, the case where the external apparatus to be connected to the television broadcast receiver 100 is the PC 150 has been described. The external apparatus is not limited to the PC 150, and, for example, may be a mobile apparatus such as a portable telephone terminal or a PDA.

### (Modification)

In the first embodiment, the example in which a remote display is realized by the television broadcast receiver 100 has been described. However, the apparatus for realizing a remote display is not limited to a television broadcast receiver, and may be a set top box to be connected to a display device. Therefore, a modification in which the apparatus is a set top box will be described.

The set top box in the modification has a configuration which is substantially similar to that of the television broadcast receiver 100 of the first embodiment, except the displaying device 211. The set top box further includes an interface to be connected to a display device. An example of the interface is a High-Definition Multimedia Interface (HDMI) . The set top box is connected to an external display device through the interface, and performs a control of displaying a screen of a terrestrial digital broadcast or the like, on the display device.

When the set top box uses a wireless LAN terminal and a Wi-Fi communication I/F, the set top box can transmit and receive information to and from a PC which is connected to the set top box through a wireless communication circuit.

Then, the set top box can receive a connection request from the PC, and control the display device to display a screen which is identical with that displayed on the PC. The control which is performed until the display control is similar to that of the first embodiment, and therefore its description is omitted.

Although, in the modification, the example in which the set top box is used has been described, any kind of display controlling apparatus which can be connected to a display device through an external interface may be used.

According to the first embodiment and the modification, as described above, in the case where the television broadcast receiver (or the set top box) is wirelessly connected to an AP, when the television broadcast receiver is set to the waiting state of connection to a remote display, the wireless connection to the AP is disconnected, and a request for start of a remote display is received from a PC. Even when the television broadcast receiver has a hardware restriction that only one wireless connection IF exists, the television broadcast receiver can receive a connection request from the PC without impairing the user's convenience.

The invention is not restricted to the above-described embodiment, and, in the stage of implementation, the invention can be embodied while the components are variously modified without departing the spirit of the invention. By appropriate combinations of plural components disclosed in the embodiment, various inventions can be configured. For example, some of the components can be omitted from all of the components shown in the embodiment. Moreover, the components in different embodiments can be appropriately combined.

## Claims

1. A display controlling apparatus comprising:
a wireless communication module configured to be wirelessly connected to at least one of an access point and an external apparatus;
a receiving module configured to, when the wireless communication module is wirelessly connected to the access point through a first channel, receive an operation of transition to a waiting state for connection to the external apparatus;
a reception controlling module configured to, when the transition to the waiting state is performed in response to the reception of the operation in the receiving module, disconnect the wireless connection to the access point, and receive a connection request from the external apparatus through all channels; and
a display controlling module configured to, when the reception controlling module receives the connection request from the external apparatus and the wireless communication module is wirelessly connected to the external apparatus through a second channel, display screen information of the external apparatus that is received from the external apparatus.

2. The display controlling apparatus according to claim 1, further comprising a controlling module configured to, when a certain time period has elapsed from transition to the waiting state that is caused by reception of the operation in the receiving module, cancel the waiting state.

3. The display controlling apparatus according to claim 1, wherein, when the wireless connection to the access point is disconnected and the wireless communication module disconnects the wireless connection to the external apparatus, the wireless communication module is reconnected to the access point through the first channel.

4. The display controlling apparatus according to claim 2, wherein, when the wireless connection to the access point is disconnected and the controlling unit cancels the waiting state, the wireless communication module is reconnected to the access point through the first channel.

5. The display controlling apparatus according to claim 2, wherein, in a case where the first channel is identical with the second channel, when the reception controlling module receives the connection request from the external apparatus, the wireless communication module is wirelessly connected to the external apparatus and the access point through the first channel.

6. The display controlling apparatus according to claim 1, wherein, in a case where the first channel is different from the second channel, when the wireless communication module is wirelessly connected to the external apparatus through the second channel, the display controlling module is configured to display a screen for prompting the second channel to be set identical with the first channel.

7. The display controlling apparatus according to claim 1, wherein, when transition to the waiting state is caused by reception of the operation in the receiving module, the display controlling module is configured to display a screen which displays information indicating that a function to be used via a network cannot be used.

8. A display controlling method which is executed in a display controlling apparatus comprising a wireless communication module, a receiving module, a reception controlling module, and a display controlling module, the method comprising:
wirelessly connecting to an access point by the wireless communication module;
when the wireless communication module is wirelessly connected to the access point through a first channel, receiving an operation of transition to a waiting state for connection to an external apparatus by the receiving module;
when the transition to the waiting state is performed in response to the reception of the operation in the receiving module, disconnecting the wireless connection to the access point and receiving a connection request from the external apparatus through all channels by the reception controlling module; and
when the reception controlling module receives the connection request from the external apparatus and the wireless communication module is wirelessly connected to the external apparatus through a second channel, displaying screen information of the external apparatus that is received from the external apparatus by the display controlling module.
